# EUROPÄISCHE PATENTSCHRIFT

(11) **EP 0 865 504 B1**
(45) Veröffentlichungstag und Bekanntmachung des Hinweises auf die Patenterteilung: **07.08.2002**
(21) Anmeldenummer: 96941048.9
(22) Anmeldetag: 28.11.1996
(51) Int. Cl.: C14C 9/00

(54) **VERWENDUNG VON SILICIUM-HALTIGEN TERPOLYMEREN ZUR FETTENDEN AUSRÜSTUNG VON LEDER**
USE OF SILICON-CONTAINING TERPOLYMERS FOR STUFFING LEATHER
UTILISATION DE TERPOLYMERS CONTENANT DU SILICIUM POUR LA MISE EN SUIF DU CUIR

(30) Priorität: 07.12.1995 DE 19545689
(43) Veröffentlichungstag der Anmeldung: 23.09.1998
(73) Patentinhaber: Cognis Deutschland GmbH & Co. KG, 40589 Düsseldorf (DE)
(72) Erfinder: BEHR, Arno, D-44263 Dortmund (DE); MÖCKEL, Rainer, D-74172 Neckarsulm (DE); PIETSCH, Oliver, D-45481 Mülheim an der Ruhr (DE); RITTER, Wolfgang, D-42781 Haan (DE); WOLTER, Fredi, D-41189 Mönchengladbach (DE); ZAUNS-HUBER, Rudolf, NL-5043 BR Tilburg (NL)
(86) Internationale Anmeldenummer: EP9605264
(87) Internationale Veröffentlichungsnummer: WO9720953

(56) Entgegenhaltungen:
- EP-A- 0 324 345
- WO-A-93/11268

## Beschreibung

### Gebiet der Erfindung

Die Erfindung betrifft die Verwendung der untenstehend näher bezeichneten Silicium-haltigen Terpolymeren zur fettenden Ausrüstung von Leder. Dabei zeichnen sich diese Verbindungen insbesondere dadurch aus, daß sie den mit ihnen behandelten Ledern bzw. Pelzen gute Wasch- und Reinigungs-Echtheit, und gute Wasserfestigkeit verleihen.

### Stand der Technik

Die Fettung pflanzlich und/oder mineralisch gegerbter Leder beziehungsweise Pelzfelle ist ein essentieller Verfahrensschritt in der Ausrüstung zum gebrauchsfertigen Wertstoff. Die Form der Fettverteilung in der Hautsubstanz und das Ausmaß der Einbindung der Fettkomponenten in die Hautsubstanz beeinflussen die Eigenschaften und die Gebrauchsfähigkeit der Fertigprodukte entscheidend. Es besteht dabei umfangreiches Fachwissen zu möglichen Interaktionen zwischen den Fettkomponenten einerseits und der gegerbten, sowie Restgerbstoffe enthaltenden Hautsubstanz andererseits. Der spezielle Aufbau der Fettungsmittel - beispielsweise das Ausmaß ihrer lipophilen Gruppen und gegebenenfalls vorliegenden Reaktivgruppen zur Umsetzung mit geeigneten Reaktivbestandteilen im gegerbten Leder - bestimmen unter anderem die Dauerhaftigkeit und Wirkung der fettenden Ausrüstung im praktischen Gebrauch der Leder- und Pelzwaren.

Ein für die Praxis sehr wichtiges Bedürfnis besteht darin, fettende Substanzen bzw. Ausrüstungsmittel zur Verfügung zu stellen, die in der gegerbten Hautsubstanz so zuverlässig gebunden werden können, daß eine für die praktischen Bedürfnisse hinreichende Waschund Reinigungsbeständigkeit der Leder- und Pelzwaren sichergestellt ist. Hochwertige Lederwaren, beispielsweise aus der Bekleidungsindustrie, sollen dabei sowohl der wäßrig-tensidischen Wäsche als auch gegebenenfalls einer chemischen Reinigung ohne wesentliche Qualitätseinbuße zugänglich sein. Schließlich wird für Sonderfälle die weiterführende Bedingung hinreichender Wasserdichtigkeit des fertig ausgerüsteten Leders gewünscht.

Zum Thema der fettenden Ausrüstung von Leder, worunter - wie in der Praxis üblich - im Rahmen der vorliegenden Erfindung sowohl die Fettung als auch die Hydrophobierung von Leder verstanden wird, sei insbesondere auf die Monographie **"Bibliothek des Leders", (Herausgeber: Hans Herfeld; Band 4, S. 59-105; Frankfurt 1987)** verwiesen.

Aus **EP-A-372 746** sind amphiphilen Copolymeren, die aus einem überwiegenden Anteil wenigstens eines hydrophoben Monomeren und einem untergeordneten Anteil wenigstens eines copolymerisierbaren hydrophilen Monomeren gebildet sind, bekannt. Als hydrophobe Monomere sind aufgezählt: langkettige Alkyl(meth)acrylate, langkettige Alkoxyoder Alkylphenoxy(polyethylen-oxid)-(meth)acrylate, pimäre Alkene, Vinylester von lankettigen Alkylcarbonsäuren und deren Gemische. Die in geringerem Anteil vorliegenden hydrophilen Comonomeren sind ethylenisch ungesättigte wasserlösliche Säuren oder hydrophile basische Comonomere. Das Molekulargewicht (Gewichtsmittel) der Copolymeren liegt im Bereich von 2.000 bis 100.000. Die Copolymeren sollen sich zur Hydrophobierung von Leder eignen.

**EP-A- 412 389** beschreibt als Mittel zum Hydrophobieren von Leder und Pelzfellen den Einsatz von Copolymerisaten, die durch radikalische Copolymerisation von (a) C₈₋₄₀-Monoolefinen mit (b) ethylenisch ungesättigten C₄₋₈-Dicarbonsäureanhydriden nach Art einer Substanzpolymerisation bei Temperaturen von 80 bis 300°C zu Copolymerisaten mit Molmassen von 500 bis 20.000 g/Mol, anschließende Solvolyse der Anhydridgruppen der Copolymerisate und zumindest partielle Neutralisation der bei der Solvolyse entstehenden Carboxylgruppen in wäßrigem Medium mit Basen hergestellt worden sind und die in Form von wäßrigen Dispersionen oder Lösungen vorliegen.

In der **EP-A-418 661** wird zum gleichen Zweck die Verwendung von Copolymerisaten beschrieben, die (a) 50 bis 90 Gew.-% C₈₋₄₀-Alkyl(meth)acrylate, Vinylester von C₈₋₄₀-Carbonsäuren oder deren Mischungen und (b) 10 bis 50 Gew.-% monoethylenisch ungesättigte C₃₋₁₂-Carbonsäuren, monoethylenisch ungesättigte Dicarbonsäureanhydride, Halbester oder Halbamide von monoethylenisch ungesättigten C₄₋₁₂-Dicarbonsäuren, Amide von C₃₋₁₂-Monocarbonsäuren oder Mischungen davon einpolymerisiert enthalten und Molmassen von 500 bis 30.000 g/Mol besitzen.

Gegenstand der **WO 93/05188** ist die Verwendung wäßriger Dispersionen von Co-Oligomeren aus der radikalisch ausgelösten Emulsionscopolymerisation von (a) Halbestern der Maleinsäure mit oleophilen Alkoholen und/oder deren niederen Alkylenoxidaddukten und (b) Acryl- und/oder Methacrylsäure als amphiphiles Mittel zur fettenden Ausrüstung von Leder.

**WO 94/01587** beschreibt Co-Oligomere auf Basis von (a) Crotonsäureestern und (b) radikalisch copolymerisierbaren hydrophilen ethylenisch ungesättigten Säuren und/oder deren Anhydriden zur fettenden Ausrüstung von Leder. Konkret offenbart sind jedoch nur solche Co-Oligomeren, die durch Umsetzung der beiden obligatorischen Monomeren in einem organischen Lösungsmittel (Xylol) hergestellt wurden.

**EP-A-583 973** beschreibt spezielle Copolymere zum Wasserabstoßendmachen von Leder. Diese Copolymeren sollen freie Carboxylatgruppen und Fettalkylgruppen enthalten und als Monomerbausteine (a) ethylenisch ungesättigte Dicarbonsäuren und (b) ethylenisch ungesättigte monofunktionelle Verbindungen, zum Beispiel Maleinsäurehalbester, enthalten.

Aus **DD-A7-286 938** ist ein Verfahren zur Lickerfettung bekannt, bei dem übliche Lederfettungsmittel anteilig durch Siliconöl ersetzt werden.

Aus **DE-A-42 14 150** sind Organosiliconsulfosuccinate bekannt, die durch Umsetzung von Maleinsäureanhydrid mit Dihydroxysilanen nebst anschließender Sulfitierung zugänglich sind. Derartigen Verbindungen wird eine wasserabweisende Wirkung zugeschrieben.

Aus **DE-A-41 39 090** ist die Verwendung Polysiloxangruppen enthaltender Copolymerisate zur Weichmachung, Fettung oder Hydrophobierung von Leder bekannt. Die Copolymerisate enthalten einpolymerisiert
i) 20-70 % eines hydrophoben Monomers, ausgewählt aus langkettigen α-Olefinen mit 12 bis 30 C-Atomen, langkettigen Alkyl(meth)acrylaten mit 12 bis 30 C-Atomen im Alkylteil, Vinylestern von langkettigen Carbonsäuren mit 12 bis 30 C-Atomen, langkettigen Vinylethern mit 12 bis 30 C-Atomen oder Mischungen dieser Monomeren,
ii) 1-60 % eines Monomers mit einer Polysiloxangruppierung der Formel A-Si(R¹)₂-[OSi(R¹)₂]ₙ-R², worin R¹ = Phenyl oder Methyl, R² = A, Phenyl oder Alkyl mit 1 bis 30 C-Atomen, n = 2 - 100 bedeuten und A eine spezielle ungesättigte, radikalisch polymerisierbare Gruppe ist, und
iii) 20-29 % wasserlösliche, ungesättigte polymerisierbare, Säuregruppen enthaltende Monomere und/oder ungesättigte C₄₋₆-Dicarbonsäureanhydride und/oder Halbester und/oder Halbamide von ungesättigten C₄₋₆-Dicarbonsäuren oder Mischungen dieser Monomeren.

Alle in der DE-A-41 39 090 offenbarten Ausführungsbeispiele enthalten als Baustein i) ein langkettiges α-Olefinen sowie als Monomer ii) *α,ω-di-(olefinisch-ungesättigte)* Silicium-haltige Verbindungen. Hinsichtlich Monomer ii) entspricht dies der auf Seite 5, Zeile 15ff zitierten Arbeitsweise, wonach die Monomeren ii) auch während der Reaktion gebildet werden können, etwa durch Reaktion eines ungesättigten Dicarbonsäureanhydrids (etwa Maleinsäureanhydrid) mit einem Hydroxy-funktionellen Polysiloxan (meist α,ω-Hydroxypropylpolydimethylsiloxan).

Ein Terpolymer aus 1-Octadecen, einem Ester von 2 Mol Maleinsäure und 1 Mol α,ω-Bis-(hydroxypropyl)di-Methylsiloxan und Acrylsäure zur Behandlung von chromgegerbtem Leder ist auch in M. Kaußen, H. Lohmann, H. Kilian; **"Das Leder", 1992 (43) 223-227** beschrieben.

**WO 95/22627** beschreibt das Hydrophobieren von Leder in wäßriger Emulsion in Gegenwart von Emulgatoren mit kammartig carboxylfunktionalisierten Polysiloxanen, wobei die Carboxylgruppen über Spacergruppen in Form von linearen oder verzweigten C₂₋₄₀-Alkylengruppen, die gegebenenfalls durch spezielle Gruppen unterbrochen oder substituiert sein können, mit der Polymehrhauptkette verbunden sind. Demnach handelt es sich bei den Copolymeren gemäß WO 95/22627 um Verbindungen, deren Hauptkette aus Si-O-Si Einheiten aufgebaut ist, und die als Seitenketten Spacer enthält, an deren Ende wiederum Carboxylfunktionen sitzen.

Aus **EP-A-350 240** sind wäßrige Emulsionen von Copolymeren bekannt, die aus wenigstens 70% radikalisch polymerisierbaren Silikon-freien Monomeren und nicht mehr als 30% wenigstens zweier Silicon-haltiger Monomerer aufgebaut sind. Diese Copolymeren sollen sich zur Beschichtung verschiedener Materialien eignen. Gemäß Beispiel 6 eignet sich ein Copolymeres aus den Bausteinen Butylacrylat, Acrylsäure, Methacryloxypropyltrimethoxysilan, Octamethylcyclotetrasiloxan und einer nicht näher offenbarten, mit AN abgekürzten Substanz (bei der es sich möglicherweise um Acrylnitril handelt) zur Beschichtung von Leder. In diesem Zusammenhang sei ausdrücklich die dem Lederfachmann notorisch vertraute Tatsache festgestellt, daß die Beschichtung von Leder im Zuge der sogenannten *Lederzurichtung -* auch Leder-Finish genannt - stattfindet. Hierbei werden Substanzen auf die Oberfläche des Leders aufgebracht. Die Lederzurichtung ist damit etwas substantiell anderes als der Prozeß der *fettenden Ausrüstung* von Leder, die die Fettung und/oder Hydrophobierung von Leder umfaßt, und die darauf abzielt, Substanzen in das Ledergefüge einzulagern. Die Lederzurichtung findet im Zuge der Lederherstellung im übrigen erst nach erfolgter Fettung/Hydrophobierung statt. Eine eventuelle Eignung Silicium-haltiger Copolymerer zur fettenden Ausrüstung von Leder ist somit durch die Offenbarung der EP-A-350 240 weder vorweggenommen noch nahegelegt.

### Beschreibung der Erfindung

Aufgabe der vorliegenden Erfindung war es, Substanzen für die fettende Ausrüstung von Leder, Pelzen und dergleichen zur Verfügung zu stellen. Dabei sollten diese Substanzen insbesondere in der Lage sein, den mit ihnen behandelten Ledern bzw. Pelzen gute Waschechtheit, Reinigungs-Echtheit zu verleihen.

Unter dem Begriff der "fettenden Ausrüstung" ist dabei einerseits die Lederfettung im engeren Wortsinne zu verstehen, als auch die Hydrophobierung von Leder.

Unter Waschechtheit und Reinigungs-Echtheit ist - wie oben bereits angedeutet und dem Fachmann geläufig - zu verstehen, daß die mit den entsprechenden Substanzen behandelten Leder bzw. Pelze durch die entsprechenden Reinigungsoperationen, z.B. durch das Waschen mit tensidischen Flotten in Waschmaschinen oder die chemische Reinigung in z.B. Perchlorethylen-haltigen Bädern, hinsichtlich ihrer Gebrauchseigenschaften nicht oder nicht wesentlich beeinträchtigt werden, also beispielsweise nur sehr wenig schrumpfen.

Eine weitere Aufgabenstellung war es, daß diese Substanzen dem damit behandelten, das heißt gelickerten Leder gute Eigenschaften hinsichtlich Weichheit und Schmalzigkeit verleihen sollten.
Eine weitere Aufgabenstellung war es, daß diese Substanzen gut von Leder aufgenommen werden und sich insbesondere durch eine hohe Lickerflottenauszehrung auszeichnen. Der letztgenannte Punkt ist neben der rein technischen Relevanz auch unter ökologischen Gesichtspunkten von Nutzen.

Eine weitere Aufgabenstellung war es, daß diese Substanzen sich durch eine gute Lagerstabilität auszeichnen.

Die genannten Aufgaben wurden erfindungsgemäß gelöst durch Terpolymere, die als Bausteine einpolymerisiert enthalten
a) ein oder mehrere olefinisch ungesättigte Verbindungen, die jeweils eine oder mehrere Carboxylgruppen und/oder Anhydridgruppen besitzen,
b) ein oder mehrere olefinisch ungesättigte Ester der allgemeinen Formel (I)

   R¹ - COOR² (I)

   worin R² eine Alkylgruppe mit 8 bis 22 C-Atomen und R¹ eine Alkenylgruppe mit 2 bis 21 C-Atomen bedeuten, und
c) ein oder mehrere olefinisch ungesättigte Verbindungen der allgemeinen Formel (II) 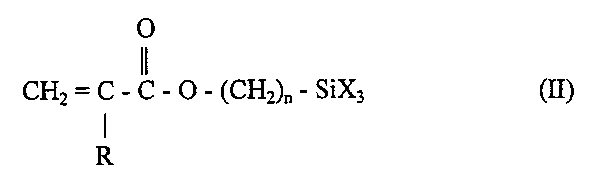
worin bedeuten:
- R Wasserstoff oder Methyl,
- X eine Gruppe C₁₋₂₀-Alkyl, C₁₋₂₀-Alkoxy, Wasserstoff, Halogen, C₆₋₁₀-Aryl und
- n eine Zahl von 1 bis 6,

Darüber hinaus wurde gefunden, daß Leder, die mit den genannten Terpolymeren behandelt wurden, auch eine verringerte Neigung zur Bildung von Fettausschlägen aufweisen.

Es sei an dieser Stell ausdrücklich festgestellt, daß es sich bei den Bausteinen a) und b) um Silicium-freie Monomere handelt, und daß ausschließlich die Bausteine c) Silicium-haltige Monomere sind.

Gegenstand der vorliegenden Erfindung ist zunächst die Verwendung von Terpolmyeren, die als Bausteine einpolymerisiert enthalten
a) ein oder mehrere olefinisch ungesättigte Verbindungen, die jeweils eine oder mehrere Carboxylgruppen und/oder Anhydridgruppen besitzen,
b) ein oder mehrere olefinisch ungesättigte Ester der allgemeinen Formel (I)

   R¹ - COOR² (I)

   worin R² eine Alkylgruppe mit 8 bis 22 C-Atomen und R¹ eine Alkenylgruppe mit 2 bis 21 C-Atomen bedeuten, und
c) ein oder mehrere olefinisch ungesättigte verbindungen der allgemeinen Formel (II) 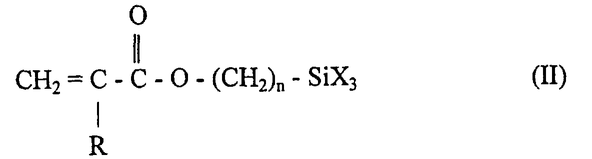
worin bedeuten:
- R Wasserstoff oder Methyl,
- X eine Gruppe C₁₋₂₀-Alkyl, C₁₋₂₀-Alkoxy, Wasserstoff, Halogen, C₆₋₁₀-Aryl und
- n eine Zahl von 1 bis 6.
zur fettenden Ausrüstung von Leder.

Die Natur der **Bausteine a)** unterliegt an sich keinen besonderen Beschränkungen. Vorzugsweise werden die Bausteine a) ausgewählt aus der Gruppe der radikalisch copolymerisierbaren ethylenisch ungesättigten Säuren und/oder deren Anhydriden. Beispiele geeigneter Bausteine a), die entweder alleine oder in Mischung miteinander angesetzt werden können, sind Acrylsäure, Methacrylsäure, Itaconsäure, Fumarsäure, Crotonsäure, Maleinsäure, Maleinsäureanhydrid. Besonders bevorzugte Bausteine a) sind Acrylsäure, Methacrylsäure, Maleinsäureanhydrid und Crotonsäure. Vorzugsweise werden die Bausteine a) in einer Menge eingesetzt, die im Bereich von 10 bis 50 Gew.-%, insbesondere im Bereich von 20 bis 40 Gew.-% - jeweils bezogen auf die Gesamtmenge der bei der Herstellung der Terpolymeren eingesetzten Bausteine a), b) und c) - liegt.

Die Natur der **Bausteine b)** unterliegt an sich keinen besonderen Beschränkungen, vorzugsweise werden die Bausteine b) jedoch ausgewählt aus der Gruppe der Ester der Acryl- bzw. Methacrylsäure mit Fettalkoholen mit 12 bis 18, insbesondere 16 bis 18 C-Atomen. Besonders bevorzugt sind dabei Acrylsäureester auf Basis von Fettalkoholen technischer Qualität, die überwiegend Mischungen von C₁₆- und C₁₈-Alkoholen darstellen. Vorzugsweise werden die Bausteine b) in einer Menge eingesetzt, die im Bereich von 50 bis 80 Gew.-%, insbesondere im Bereich von 60 bis 70 Gew.-% - jeweils bezogen auf die Gesamtmenge der bei der Herstellung der Terpolymeren eingesetzten Bausteine a), b) und c) - liegt.

Beispiele für geeignete **Bausteine c)** sind: Methacryloxypropyltrimethoxysilan, (3-Acryloxypropyl)trimethoxysilan, Methacryloxyethoxytrimethylsilan, Methacryloxymethyltrimethoxysilan und Methacryloxypropyldimethylmethoxysilan.

In einer bevorzugten Ausführungsform der vorliegenden Erfindung werden die Bausteine c) in einer Menge eingesetzt, die im Bereich von 0,5 bis 15 Gew.-% und insbesondere im Bereich von 1 bis 5 Gew.-% - jeweils bezogen auf die Gesamtmenge der bei der Herstellung der Terpolymeren eingesetzten Monomer-Bausteine a), b) und c) - liegt. Dabei ist der Bereich von 1,5 bis 3,5 Gew.-% besonders bevorzugt. Dabei hat sich aus der Gruppe der Verbindungen der allgemeinen Formel (II) insbesondere 3-Methacryloxypropyltrimethoxysilan (MAOPTOSI) als besonders geeigneter Baustein c) erwiesen.

Erfindungsgemäß werden vorzugsweise solche Terpolymeren eingesetzt, bei denen die Bausteine a) und b) in Gewichtsverhältnissen von 9:1 bis 1:9 vorliegen. Vorzugsweise werden die Bausteine a) und b) in Gewichtsverhältnissen eingesetzt, die im Bereich von 1:3 bis 3:1 liegen.

Die Herstellung der erfindungsgemäß einzusetzenden Terpolymeren wird vorzugsweise als Lösungsmittelpolymerisation durchgeführt. Dabei werden insbesondere niedere Alkohole wie Ethanol, n-Propanol, Isopropanol oder Butanol-Isomere als Lösungsmittel eingesetzt. Besonders bevorzugt ist dabei der Einsatz von Isopropanol.

Als Starter der Polymerisation werden Radikalinitiatoren in Mengen von ca. 1 bis 5 Gew.-% - bezogen auf die Gesamtmenge der eingesetzten Monomeren a) bis c) - eingesetzt. Besonders bewährt haben sich dabei Azoverbindungen, etwa Azobis(isobutyronitril) oder 2,2'-Azobis(2-methylbutyronitril).

Die Herstellung der erfindungsgemäß einzusetzenden Terpolymeren wird vorzugsweise gemäß folgendem Verfahren durchgeführt: In einer Apparatur mit Rührvorrichtung wird die Hauptmenge des Lösungsmittels (Isopropanol) vorgelegt und auf eine Temperatur im Bereich von 75 bis 80 °C erhitzt. Anschließend wird über einen Zeitraum von 2 Stunden ein Gemisch der Komponenten a), b) und c) zusammen mit den Radikalstarter - wobei dieses Gemisch in der Restmenge des Lösungsmittels gelöst ist - in die Apparatur eindosiert. Gewünschtenfalls kann dieser Zulauflösung noch eine Reglerkomponente zugemischt sein, beispielsweise Mercaptopropionsäure oder Dodecanthiol. Nach einer weiteren halben Stunde wird eine Nachinitiatorlösung aus Azoverbindung und Lösungsmittel (Isopropanol) zudosiert. Die Reaktionslösung wird für weitere 90 Minuten bei ca. 80 °C gerührt, so daß sich eine Gesamt-Reaktionszeit von etwa 4 Stunden ergibt. Die derart hergestellten Terpolymeren enthalten nur noch geringe Mengen an nicht umgesetzten Monomeren (Restmonomere). Der Restgehalt an Komponente a) beträgt üblicherweise 0,2 bis 1,0 Gew.-%. Der Restgehalt an Komponente b) beträgt üblicherweise 2 bis 3 Gew.-%. Die Siliciumkomponente c) ist in der Regel nicht mehr als Restmonomeres nachweisbar. Die Molmassen der Terpolymeren - bestimmt mit Styragel - und Ultrastyragelsäulen per GPC - betragen im Zahlenmittel 2.000 bis 8.000 und im Gewichtsmittel 4.000 bis 30.000.

Für die ledertechnische Anwendung werden die Terpolymeren in eine wäßrige Dispersion überführt. Dazu wird ein Teil des Isopropanols abdestilliert, mit wäßriger Natronlauge sowie mit weiterem Wasser der gewünschte Feststoff-Endgehalt sowie schließlich ein pH-Wert im Bereich von 6,5 bis 7,5, vorzugsweise im Bereich von 6,8 bis 7,2, eingestellt.

In einer bevorzugten Ausführungsform der Erfindung werden die genannten Terpolymeren zur Behandlung von Chromledern verwendet. Dabei umfaßt der Begriff Chromleder außer rein chromgegerbten Ledern auch die kombiniert chrom-vegetabilisch-gegerbten, die kombiniert chrom-synthetisch-gegerbten, die kombiniert chrom-vegetabilischsynthetisch-gegerbten und die kombiniert chrom-synthetisch-vegetabilisch-gegerbten Ledersorten. Selbstverständlich umfaßt dieser Begriff auch jene Leder, bei deren Gerbung ein Teil des Chromsalzes durch basisches Aluminium- oder Zirkoniumsalz ersetzt wurde. Bevorzugt sind Chromleder, bei deren Herstellung Häute von Rindern verwendet wurden und die bei pH-Werten im Bereich von 3,8 bis 4,6 gegerbt wurden.

Ein weiterer Gegenstand der Erfindung sind Silicium-haltige Terpolymere, die als Bausteine einpolymerisiert enthalten
a) ein oder mehrere olefinisch ungesättigte Verbindungen, die eine oder mehrere Carboxylgruppen und/oder Anhydridgruppen besitzen,
b) ein oder mehrere olefinisch ungesättigte Ester der allgemeinen Formel (I)

   R¹ - COOR² (I)

   worin R² eine Alkylgruppe mit 8 bis 22 C-Atomen und R¹ eine Alkenylgruppe mit 2 bis 21 C-Atomen bedeuten, und
c) ein oder mehrere olefinisch ungesättigte Verbindungen der allgemeinen Formel (II) 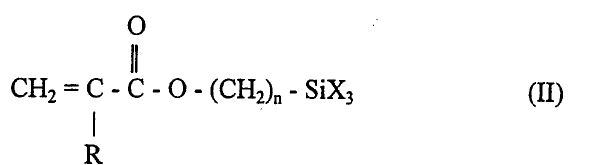
worin bedeuten:
- R Wasserstoff oder Methyl,
- X eine Gruppe C₁₋₂₀-Alkyl, C₁₋₂₀-Alkoxy, Wasserstoff, Halogen, C₆₋₁₀-Aryl und
- n eine Zahl von 1 bis 6,

Im Hinblick auf die bevorzugten Bausteine a), b) und c) sowie deren Anteil in den Terpolymeren gilt das bereits oben gesagte.

Die folgenden Beispiele dienen der Erläuterung der Erfindung.

### Beispiele

| **Abkürzungen** | |
|---|---|
| M (Z) = | Molmasse (Zahlenmittel) |
| M (G) = | Molmasse (Gewichtsmittel) |
| MAOPTOSI = | 3-Methacryloxypropyltrimethoxysilan |
| AIBN = | Azo-isobutyronitril |
| C_{16/18}-Fettacrylat-Gemisch = | Ester der Acrylsäure und einem Fettalkoholgemisch, bestehend aus 45% Palmitylalkohol und 55% Stearylalkohol. |

### 1. Herstellung der Terpolymeren

### Beispiel 1 (B1)

| ***Reaktion:*** | |
|---|---|
| Vorlage: | 450 g Isopropanol |
| Zudosierung: | 500 g Stearylacrylat |
| | 225 g Acrylsäure |
| | 26 g MAOPTOSI |
| | 225 g Isopropanol |
| | 11,25 g AIBN |
| | 11,25 g 3-Mercaptopropionsäure |
| Nachinitiator: | 1,2 g AIBN |
| | 30 g Isopropanol |
| Temperatur: | 76 bis 80 °C |
| Zeit: | 4 Stunden |

| ***Analytische Daten:*** | |
|---|---|
| pH-Wert | 7,1 |
| Feststoffgehalt | 32,4 Gew.-% |
| Restmonomeren-Gehalt | 2,4 % Stearylacrylat |
| | 0,7 % Acrylsäure |
| | < 1 % Mercaptopropionsäure |
| | < 0,1 Si-Verbindung |
| Molmassen | M(Z) = 3700 |
| | M(G) = 26200 |

### Beispiel 2 (B2)

| ***Reaktion:*** | |
|---|---|
| Vorlage | 210 g Isopropanol |
| Zudosierung | 238 g Stearylacrylat |
| | 105 g Acrylsäure |
| | 7 g MAOPTOSI |
| | 105 g Isopropanol |
| | 5,25 g AIBN |
| | 5,25 g 3-Mercaptopropionsäure |
| Nachinitiator | 0,5 g AIBN |
| | 14 g Isopropanol |
| Temperatur | 79 bis 80 °C |
| Zeit | 4 Stunden |

| ***Analytische Daten:*** | |
|---|---|
| pH-Wert | 7,1 |
| Feststoffgehalt | 32,4 Gew.-% |
| Restmonomeren-Gehalt | 2,7 % Stearylacrylat |
| | 0,3 % Acrylsäure |
| | < 1 % Mercaptopropionsäure |
| | < 0,1 Si-Verbindung |
| Molmassen | M(Z) = 3600 |
| | M(G) = 8500 |

### Beispiel 3 (B3)

| ***Reaktion:*** | |
|---|---|
| Vorlage | 450 g Isopropanol |
| Zudosierung | 510 g C₁₆-C₁₈-Fettacrylat-Gemisch |
| | 225 g Acrylsäure |
| | 15 g MAOPTOSI |
| | 225 g Isopropanol |
| | 11,25 g AIBN |
| | 11,25 g 3-Mercaptopropionsäure |
| Nachinitiator | 1,2 g AIBN |
| | 30 g Isopropanol |
| Temperatur | 74 bis 81 °C |
| Zeit | 4 Stunden |

| ***Analytische Charakterisierung:*** | |
|---|---|
| pH-Wert | 7,1 |
| Feststoffgehalt | 32,4 Gew.-% |
| Restmonomeren | 0,9 % Palmitylacrylat |
| | 0,8 % Stearylacrylat |
| | 0,1 % Acrylsäure |
| | < 1 % Mercaptopropionsäure |
| | < 0,1 Si-Verbindung |
| Molmassen | M(Z) = 3000 |
| | M(G) = 7600 |

### Beispiel 4 (B4)

| ***Reaktion:*** | |
|---|---|
| Vorlage | 450 g Isopropanol |
| Zudosierung | 503 g C₁₆-C₁₈-Fettacrylat-Gemisch |
| | 225 g Acrylsäure |
| | 22,5 g MAOPTOSI |
| | 225 g Isopropanol |
| | 11,25 g AIBN |
| | 11,25 g 3-Mercaptopropionsäure |
| Nachinitiator | 1,2 g AIBN |
| | 30 g Isopropanol |
| Temperatur | 77 bis 83 °C |
| Zeit | 4 Stunden |

| ***Analytische Charakterisierung:*** | |
|---|---|
| pH-Wert | 7,0 |
| Feststoffgehalt | 29,3 Gew.-% |
| Restmonomeren-Gehalt | 0,8 % Palmitylacrylat |
| | 0,7 % Stearylacrylat |
| | 0,1 % Acrylsäure |
| | < 1 % Mercaptopropionsäure |
| | < 0,1 Si-Verbindung |
| Molmassen | M(Z) = 3500 |
| | M(G) = 7800 |

### Vergleichsbeispiel 1 (V1)

| ***Reaktion:*** Wie in Beispiel 4, aber ohne Zusatz von MAOPTOSI | |
|---|---|
| ***Analytische Charakterisierung:*** | |
| pH | 7,0 |
| Feststoffgehalt | 31,1 % |
| Restmonomeren-Gehalt | 0,5 % Palmitylacrylat |
| | 0,7 % Stearylacrylat |
| | 0,2 % Acrylsäure |
| | < 1 % Mercaptopropionsäure |
| Molmassen | M(Z) = 2600 |
| | M(G) = 5200 |

### Vergleichsbeispiel 2 (V2)

"Lubritan WP", handelsübliches Produkt der Fa. Rohm u. Haas.

### 2. Behandlung der Leder

Die Terpolymeren gemäß den Beispielen 1 bis 4 sowie den Vergleichsbeispielen 1 und 2 wurden gemäß dem nachfolgend beschriebenen Arbeitsgang eingesetzt. Die in der Tabelle 1 angegebenen Prozent-Werte bedeuten dabei Gew.-% Aktivsubstanz. Die ProzentAngaben sind bezogen auf das Falz-Gewicht des eingesetzten Rindleder wetblue zu verstehen.

**Tabelle 1:**

| Ausgangsmaterial: Rindleder wetblue, gefalzt; Stärke: 1,8 mm; Anfangs-pH-Wert: 3,8 | | | | | |
|---|---|---|---|---|---|
| Arbeitsgang | % | Produkt/Bemerkungen | °C | Laufzeit (min) | pH |
| Waschen | 300 | H₂O | 40 | | |
| | 0,2 | HCOOH ablassen | | 15' | |
| Neutralisation | 150 | H₂O | 40 | | |
| | 1 | NaHCOO ablassen | | 45' | 4,8 |
| Färbung | 150 | H₂O | 50 | | |
| | 1 | Anionischer Metallkomplexfarbstoff | | 30' | |
| fettende Aus- | + 5,5 | **Prüfsubstanz** | | 90' | |
| rüstung | + 0,8 | HCOOH | | 30' | 3,8 |
| Nachgerbung | + 2 | Chromsulfat 33 % basisch | | 30' | |
| | + 2 | Chromsulfat 33 % basisch | | 60' | 3,5 |
| | | ablassen | | | |
| Waschen | 300 | H₂O ablassen | 40 | 10' | |
| | 300 | H₂O | 20 | 10' | |
| | | über Nacht auf Bock ausrecken Vakuum 1 Min/70 °C trocknen konditionieren stollen | | | |

### 3. Prüfung der Eigenschaften der behandelten Leder

### 3.1. Prüfmethoden

### a) Chemischreinigungsechtheit

Die zu prüfenden Leder wurden 24 Stunden unter DIN-Normbedingungen für Leder (23 °C / 50 % relative Luftfeuchtigkeit) konditioniert. Danach wurden drei quadratische Probekörper der genauen Maße 10 cm x 10 cm = 100 cm² aus der offiziellen Probeentnahmestelle für Leder nach IUC / 2 bzw. UIP / 2 entnommen.

Die Proben wurden wie folgt gewaschen:
**1. Chemisch Reinigen**
   die Lederproben wurden einzeln gereinigt
   Chemische Reinigungsmaschine: Typ Böwe LFM-12
   Lösungsmittel: Perchloräthylen
   Reinigung: 6 min
   Trocknung: 20 min bei 60 °C
   anschließend wurden die Probekörper 24 h bei Raumtemperatur abgelüftet (nicht ge spannt)
**2. Nacharbeiten und Auswertung**
   Nach dem Waschen wurden die Leder unter DIN-Bedingungen (23 °C / 50 % relati ve Luftfeuchtigkeit) 24 Stunden klimatisiert.
**3.** Die Proben wurden gestollt (Stufe 3, Molissa) und anschließend beurteilt und ge messen. Das Ergebnis der Auswertung ist in % angegeben.
**4.** Die Proben wurden mit den Originalledern verglichen und die Weichheit bzw. des sen Verlust oder Zugewinn beurteilt.

Für weitere Chemischreinigungsversuche wurden die Schritte 1 - 4 wiederholt und dokumentiert.

### b) Waschechtheit

Die zu prüfenden Leder wurden 24 Stunden unter DIN-Normbedingungen für Leder (23 °C) / 50 % relative Luftfeuchtigkeit.) konditioniert. Danach wurden drei quadratische Probekörper der genauen Maße 10 cm x 10 cm = 100 cm² aus der offiziellen Probeentnahmestelle für Leder nach IUC/2 bzw. UIP/2 entnommen: Die Proben wurden wie folgt gewaschen:
**1. Waschen**
   Waschmaschine Typ Miele De-Luxe Electronic W-760
   Programm: Vollwäsche, Buntwäsche
   Halbwassereinstellung
   Temperatur: 60 °C
   Waschmitteleinwaage: 10 g "Fewa" (Fa. Henkel) in der Vorwäsche
   25 g "Fewa" in der Hauptwäsche
**2. Trocknung**
   Die Probekörper wurden langsam bei Raumtemperatur ohne Umluft getrocknet (nicht spannen!)
**3. Nacharbeiten und Auswertung**
   Nach dem Waschen wurden die Leder unter DIN-Norm-Bedingungen (23 °C / 50 % relative Luftfeuchtigkeit) 24 Stunden klimatisiert.
**4.** Die Proben wurden gestollt (Stufe 3, Molissa) und anschließend beurteilt und ge messen. Das Ergebnis der Auswertung ist in % angegeben.
**5.** Die Proben wurden mit den Originalledern verglichen und die Weichheit bzw. des sen Verlust oder Zugewinn beurteilt.

Für weitere Waschversuche wurden die Schritte 1 - 5 wiederholt und dokumentiert.

### c) Hydrophobierung

Die Hydrophobierung wurde nach den in Europa bzw. den USA üblichen Bedingungen ermittelt. Die entsprechenden Meßgrößen sind:
1) Penetrometerwerte (PW), die die prozentuale Wasseraufnahme bis zum Zeitpunkt des Wasserdurchtritts angeben. Gemessen wurde gemäß Methode IUP10 der Internationalen Union der Leder-Chemiker-Verbände (Kommission für physikalische Lederprüfung) mit einem Bally-Penetrometer. Die Methode ist publiziert in "Das Leder", 1961, (12), S. 36-40. Dabei lag die Wasserdurchtrittszeit in allen Fällen über 24 Stunden.
2) Die Maeserflexe (MF), die gemäß der amerikanischen Prüfmethode nach ASTM D-2009-70 ermittelt wurden.

### d) Weitere Eigenschaften

Die mit den Prüfsubstanzen behandelten Leder wurden außerdem auf Weichheit, Schmalzigkeit, und Fettflecken geprüft. Da es sich hierbei um dem Lederfachmann notorisch vertraute Standardprüfmethoden handelt, wird an dieser Stelle keine explizite Beschreibung der Methoden gegeben. Die Beurteilungs-Skala reicht von 1 (schlecht) bis 10 (sehr gut).

### 3.2. Prüfergebnisse

Die Ergebnisse der oben genannten Methoden sind in den Tabellen 2 und 3 zusammengestellt.

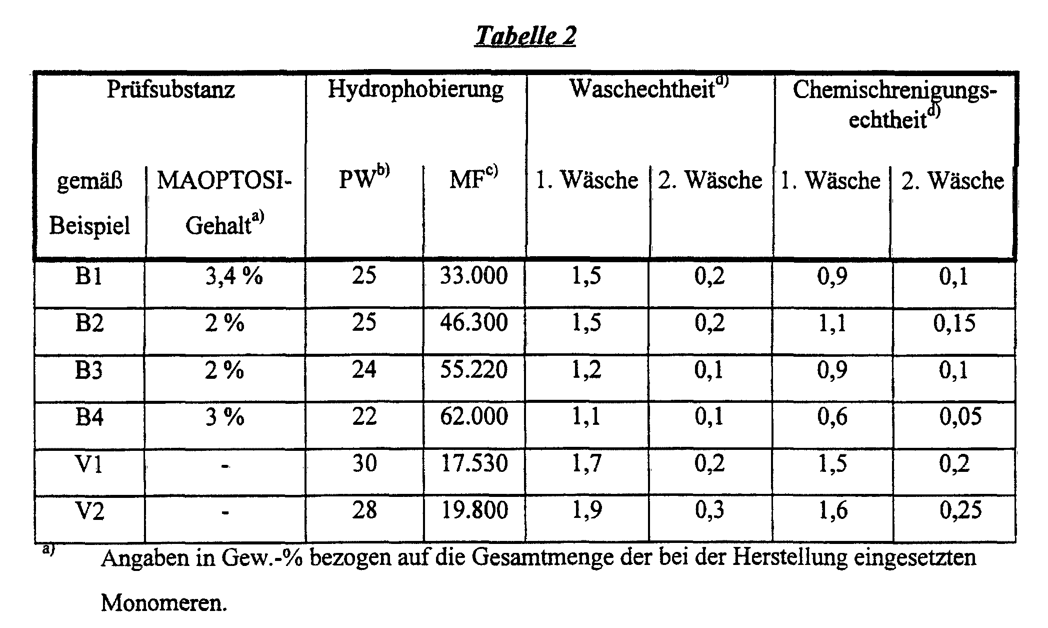

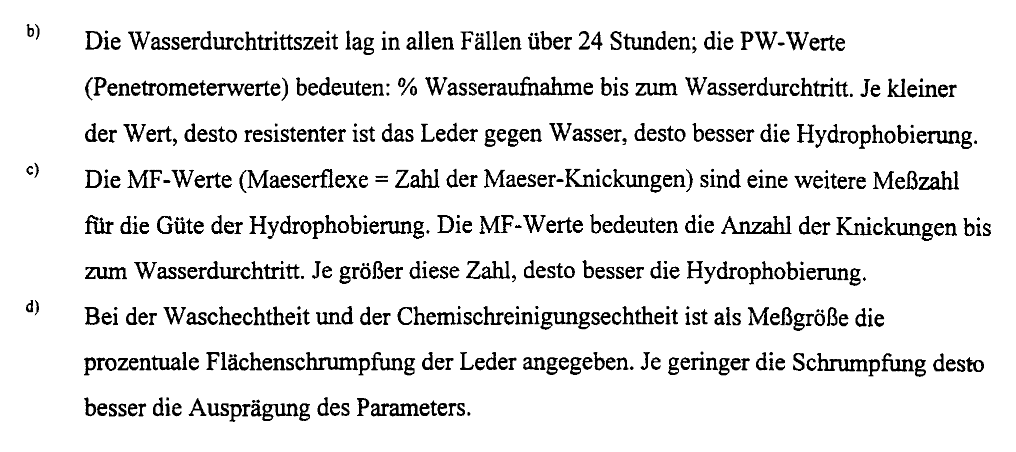

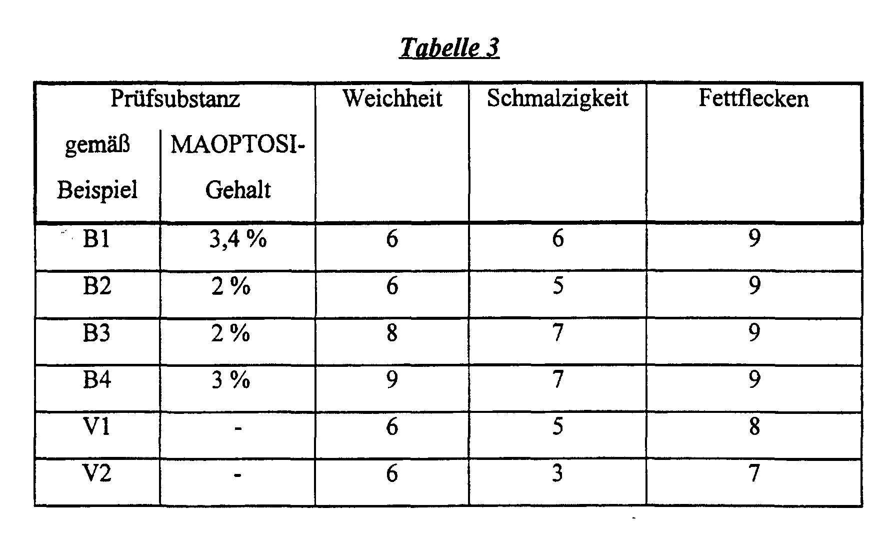

## Patentansprüche

1. Verwendung von Silicium-haltigen Terpolymeren zur fettenden Ausrüstung von Leder, **dadurch gekennzeichnet, daß** die Terpolymeren als Bausteine einpolymerisiert enthalten
a) ein oder mehrere olefinisch ungesättigte Verbindungen, die jeweils eine oder mehrere Carboxylgruppen und/oder Anhydridgruppen besitzen,
b) ein oder mehrere olefinisch ungesättigte Ester der allgemeinen Formel (I)
R¹ - COOR² (I)
worin R² eine Alkylgruppe mit 8 bis 22 C-Atomen und R¹ eine Alkenylgruppe mit 2 bis 21 C-Atomen bedeuten, und
c) ein oder mehrere Verbindungen der allgemeinen Formel (II) 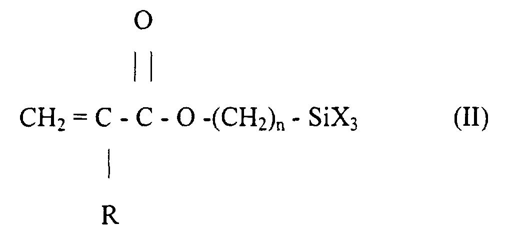 worin bedeuten:
- R Wasserstoff oder Methyl,
- X eine Gruppe C₁₋₂₀-Alkyl, C₁₋₂₀-Alkoxy, Wasserstoff, Halogen, C₆₋₁₀-Aryl, und
- n eine Zahl von 1 bis 6.

2. Verwendung nach Anspruch 1, wobei die Bausteine a) ausgewählt sind aus der Gruppe Acrylsäure, Methacrylsäure, Crotonsäure und Maleinsäureanhydrid.

3. Verwendung nach Anspruch 1 oder 2, wobei die Bausteine b) ausgewählt sind aus der Gruppe der Ester der Acryl- und/oder Methacrylsäure mit Fettalkoholen mit 12 bis 18 C-Atomen.

4. Verwendung nach einem der Ansprüche 1 bis 3, wobei die Bausteine c) ausgewählt sind aus der Gruppe Methacryloxypropyltrimethoxysilan, (3-Acryloxypropyl)trimethoxysilan, Methacryloxyethoxytrimethylsilan, Methacryloxymethyltrimethoxysilan und Methacryloxypropyldimethylmethoxysilan.

5. Verwendung nach einem der Ansprüche 1 bis 4, wobei der Baustein c) Methacryloxypropyltrimethoxysilan ist.

6. Verwendung nach einem der Ansprüche 1 bis 5, wobei die Terpolymere die Bausteine a) und b) in Gewichtsverhältnissen im Bereich von 1:3 bis 3:1 enthalten.

7. Verwendung nach einem der Ansprüche 1 bis 5, wobei die Terpolymeren die Bausteine c) in einer Menge im Bereich von 1,5 bis 3,5 Gew.-% - bezogen auf die Summe der Bausteine a) bis c) - enthalten.

8. Silicium-haltige Terpolymere, die als Bausteine einpolymerisiert enthalten
a) ein oder mehrere olefinisch ungesättigte Verbindungen, die jeweils eine oder mehrere Carboxylgruppen und/oder Anhydridgruppen besitzen,
b) ein oder mehrere olefinisch ungesättigte Ester der allgemeinen Formel (I)
R¹ - COOR² (I)
worin R² eine Alkylgruppe mit 8 bis 22 C-Atomen und R¹ eine Alkenylgruppe mit 2 bis 21 C-Atomen bedeuten, und
c) ein oder mehrere Verbindungen der allgemeinen Formel (II) 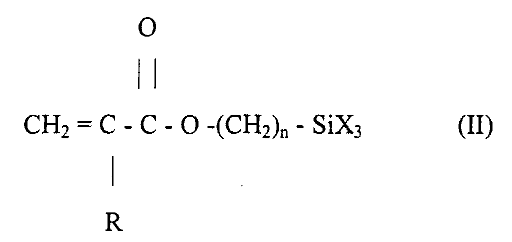 worin bedeuten:
- R Wasserstoff oder Methyl,
- X eine Gruppe C₁₋₂₀-Alkyl, C₁₋₂₀-Alkoxy, Wasserstoff, Halogen, C₆₋₁₀-Aryl, und
- n eine Zahl von 1 bis 6.

9. Terpolymere nach Anspruch 8, wobei die Bausteine a) ausgewählt sind aus der Gruppe Acrylsäure, Methacrylsäure, Crotonsäure und Maleinsäureanhydrid.

10. Terpolymere nach Anspruch 8 oder 9, wobei die Bausteine b) ausgewählt sind aus der Gruppe der Ester der Acryl- und/oder Methacrylsäure mit Fettalkoholen mit 12 bis 18 C-Atomen.

11. Terpolymere nach einem der Ansprüche 8 bis 10, wobei der Baustein c) Methacryloxypropyltrimethoxysilan ist.

## Claims

1. The use of silicon-containing terpolymers for the oiling of leather, **characterized in that** the terpolymers contain
a) one or more olefinically unsaturated compounds each containing one or more carboxyl groups and/or anhydride groups,
b) one or more olefinically unsaturated esters corresponding to general formula (I):
R¹-COOR² (I)
in which R² is an alkyl group containing 8 to 22 carbon atoms and R¹ is an alkenyl group containing 2 to 21 carbon atoms and
c) one or more compounds corresponding to general formula (II): 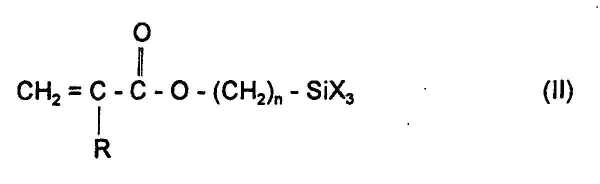 in which
- R is hydrogen or methyl,
- X is a C₁₋₂₀ alkyl group, a C₁₋₂₀ alkoxy group, hydrogen, halogen, a C₆₋₁₀ aryl group and
- n is a number of 1 to 6
in copolymerized form as structural elements.

2. The use claimed in claim 1, **characterized in that** the structural elements a) are selected from the group consisting of acrylic acid, methacrylic acid, crotonic acid and maleic anhydride.

3. The use claimed in claim 1 or 2, **characterized in that** the structural units b) are selected from the group consisting of the esters of acrylic and/or methacrylic acid with fatty alcohols containing 12 to 18 carbon atoms.

4. The use claimed in any of claims 1 to 3, **characterized in that** the structural elements c) are selected from the group consisting of methacryloxypropyl trimethoxysilane, (3-acryloxypropyl)-trimethoxysilane, methacryloxyethoxy trimethylsilane, methacryloxymethyl trimethoxysilane and methacryloxypropyl dimethyl methoxysilane.

5. The use claimed in any of claims 1 to 4, **characterized in that** the structural element c) is methacryloxypropyl trimethoxysilane.

6. The use claimed in any of claims 1 to 5, **characterized in that** the terpolymers contain structural elements a) and b) in ratios by weight of 1:3 to 3:1.

7. The use claimed in any of claims 1 to 5, **characterized in that** the terpolymers contain structural elements c) in a quantity of 1.5% by weight to 3.5% by weight, based on the sum of structural elements a) to c).

8. Silicon-containing terpolymers which contain
a) one or more olefinically unsaturated compounds each containing one or more carboxyl groups and/or anhydride groups,
b) one or more olefinically unsaturated esters corresponding to general formula (I):
R¹-COOR² (I)
in which R² is an alkyl group containing 8 to 22 carbon atoms and R¹ is an alkenyl group containing 2 to 21 carbon atoms and
c) one or more compounds corresponding to general formula (II): 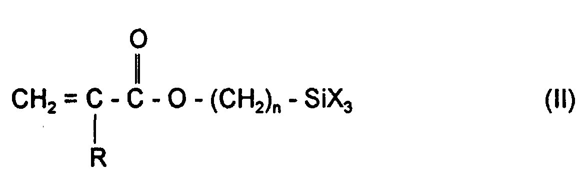 in which
- R is hydrogen or methyl,
- X is a C₁₋₂₀ alkyl group, a C₁₋₂₀ alkoxy group, hydrogen, halogen, a C₆₋₁₀ aryl group and
- n is a number of 1 to 6
in copolymerized form as structural elements.

9. Terpolymers as claimed in claim 8, **characterized in that** the structural elements a) are selected from the group consisting of acrylic acid, methacrylic acid, crotonic acid and maleic anhydride.

10. Terpolymers as claimed in claim 8 or 9, **characterized in that** the structural elements b) are selected from the group consisting of the esters of acrylic and/or methacrylic acid with fatty alcohols containing 12 to 18 carbon atoms.

11. Terpolymers as claimed in any of claims 8 to 10, **characterized in that** the structural element c) is methacryloxypropyl trimethoxysilane.

## Revendications

1. Utilisation de terpolymères contenant du silicium pour l'apprêtage graissant du cuir,
**caractérisée en ce que**
les terpolymères contiennent introduits par polymérisation comme éléments constitutifs :
a) un ou plusieurs composés non saturés oléfiniquement qui possèdent à chaque fois un ou plusieurs groupes carboxyle et/ou groupes anhydride,
b) un ou plusieurs esters non saturés oléfiniquement de formule générale (I) :
R¹ - COOR² (I)
dans laquelle R² signifie un groupe alkyle ayant de 8 à 22 atomes de carbone et R¹ un groupe alkényle ayant de 2 à 21 atomes de carbone, et
c) un ou plusieurs composés de formule (II) : 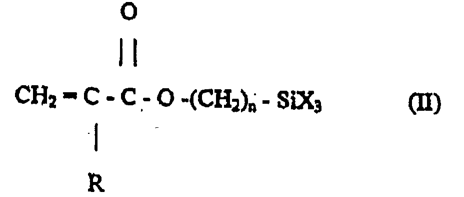
dans laquelle
R signifie hydrogène ou méthyle,
X signifie un groupe alkyle en C₁-C₂₀, un alkoxy en C₁-C₂₀, de l'hydrogène, un halogène, un aryle en C₆-C₁₀ et
n signifie un nombre de 1 à 6.

2. Utilisation selon la revendication 1,
dans laquelle
les éléments constitutifs a) sont choisis dans le groupe de l'acide acrylique, de l'acide méthacrylique, de l'acide crotonique et de l'anhydride maléique.

3. Utilisation selon la revendication 1 ou la revendication 2,
dans laquelle
les éléments constitutifs b) sont choisis dans le groupe des esters de l'acide acrylique et/ou méthacrylique avec des alcools gras ayant de 12 à 18 atomes de carbone.

4. Utilisation selon l'une quelconque des revendications 1 à 3,
dans laquelle
les éléments constitutifs c) sont choisis dans le groupe du méthacryloxypropyltriméthoxysilane, du (3-acryloxypropyl)triméthoxysilane, du méthacryloxyéthoxytriméthylsilane, du méthacryloxyméthyltriméthoxysilane et du méthacryloxypropyldiméthylméthoxysilane.

5. Utilisation selon l'une quelconque des revendications 1 à 4,
dans laquelle l'élément constitutif c) est le méthacroloxypropyltriméthoxysilane.

6. Utilisation selon l'une quelconque des revendications 1 à 5,
dans laquelle
les terpolymères renferment les éléments constitutifs a) et b) dans des rapports en poids dans la zone de 1 : 3 à 3 : 1.

7. Utilisation selon l'une quelconque des revendications 1 à 5,
dans laquelle
les terpolymères renferment les éléments constitutifs c) en une quantité dans la zone de 1,5 à 3,5 % en poids, rapporté à la somme des éléments constitutifs a) à c).

8. Terpolymères contenant du silicium qui renferment comme éléments constitutifs introduits par polymérisation :
a) un ou plusieurs composés non saturés oléfiniquement qui possèdent respectivement un ou plusieurs groupes carboxyle et/ou des groupes anhydride,
b) un ou plusieurs esters non saturés oléfniquement de formule générale (I) :
R¹-COOR² (I)
dans laquelle R² signifie un groupe alkyle ayant de 8 à 22 atomes de carbone et,
R¹ signifie un groupe alkényle ayant de 2 à 21 atomes de carbone, et
c) un ou plusieurs composés de formule générale (II) : 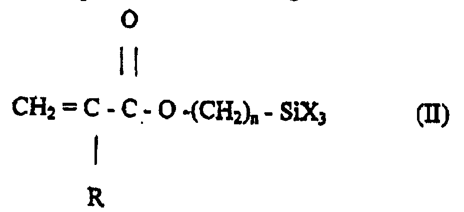
dans laquelle R signifie de l'hydrogène ou un méthyle,
X signifie un groupe alkyle en C₁-C₂₀, un alkoxy en C₁-C₂₀, un hydrogène, un halogène, un aryle en C₆-C₁₀ et
n signifie un nombre allant de 1 à 6.

9. Terpolymères selon la revendication 8,
dans lesquels
les éléments constitutifs a) sont choisis dans le groupe de l'acide acrylique de l'acide méthacrylique, de l'acide crotonique et de l'anhydride maléfique.

10. Terpolymères selon la revendication 8 ou la revendication 9,
dans lesquels
les éléments constitutifs b) sont choisis dans le groupe des esters de l'acide acrylique et/ou de l'acide méthacrylique avec des alcools gras ayant de 12 à 18 atomes de carbone.

11. Terpolymères selon l'une quelconque des revendications 8 à 10,
dans lesquels
l'élément constitutif c) est le méthacryloxypropyltriméthoxysilane.
